# EUROPÄISCHE PATENTSCHRIFT

(11) **EP 1 371 944 B1**
(45) Veröffentlichungstag und Bekanntmachung des Hinweises auf die Patenterteilung: **12.11.2008**
(21) Anmeldenummer: 03012562.9
(22) Anmeldetag: 03.06.2003
(51) Int. Cl.: G01B 11/24, G01B 5/24, G01B 11/26, G01B 21/22, B07C 5/34

(54) **Vorrichtung zum Prüfen einer Behältermündung auf das Vorhandensein einer Neigung**
Apparatus for inspecting a container's mouth with respect to the presence of an inclination
Dispositif pour contrôler l'ouverture d'un récipient par rapport à la présence d'une inclinaison

(30) Priorität: 10.06.2002 DE 20208943 U
(43) Veröffentlichungstag der Anmeldung: 17.12.2003
(73) Patentinhaber: Heye International GmbH, 31683 Obernkirchen (DE)
(72) Erfinder: Schmidt, Peter, 31749 Auetal (DE); Haase, Matthias, 31683 Obernkirchen (DE)
(74) Vertreter: Callies, Rainer Michael

(56) Entgegenhaltungen:
- EP-A- 0 293 226
- DE-A- 2 145 679
- PATENT ABSTRACTS OF JAPAN vol. 1997, no. 11, 28. November 1997 (1997-11-28) & JP 09 178448 A (TOYO GLASS CO LTD), 11. Juli 1997 (1997-07-11)

## Beschreibung

Die Erfindung bezieht sich auf eine Vorrichtung zum Prüfen einer Behältermündung, insbesondere der Mündung eines Hohlglasgegenstandes, auf das Vorhandensein einer Neigung. Behälter, wie insbesondere Glasbehälter, zur Aufnahme von Lebensmitteln, müssen im Rahmen des Herstellungsprozesses auf eine mögliche Neigung ihrer Mündung hin überprüft werden. Wenn eine Mündung eine Neigung aufweist, die außerhalb eines vorgegebenen Toleranzbereichs liegt, wird der Behälter in den Ausschuss gegeben. Da heutzutage in Abfüllbetrieben extrem hohe Verarbeitungsgeschwindigkeiten angewandt werden und daher die Maschinen, die die Behälter verschließen, sehr schnell arbeiten, sind die Anforderungen an eine Mündung hinsichtlich Präzision entsprechend hoch.

Aus der DE 2145679 ist bekannt, eine Behältermündung in Bezug auf eine mögliche Neigung dadurch zu prüfen, dass ein Hütchen dichtend auf den Mündungsumfang gesetzt wird und aus dem von dem Behälter und dem Hütchen gebildeten Hohlraum Luft zur Herstellung eines Unterdrucks abgesaugt wird. Wenn eine zu starke Neigung der Mündung vorliegt, wird das Hütchen nicht mehr dichtend auf dem Mündungsumfang aufliegen, so dass die Erzeugung des Unterdrucks nicht wie gewünscht erfolgt. Dabei kann das Hütchen starr an einer zum Aufsetzen auf die Mündung vorgesehenen Führungsstange befestigt sein, oder es kann in seinem Neigungswinkel relativ zur horizontalen Ebene flexibel an der Führungsstange angebracht sein, wodurch der Toleranzbereich in Bezug auf eine Mündungsneigung entsprechend einstellbar ist. Alternativ kann statt des Unterdrucks auch ein Überdruck als Prüfkriterium erzeugt werden. Diese Verfahren erlauben jedoch nur einen relativ geringen Durchsatz an Behältern, da die Einstellung des Unter- bzw. Überdrucks eine bestimmte Zeit dauert. Ferner erweist sich bei diesen Verfahren als Nachteil, dass die Prüfung nur als Ergebnis ein Gut- oder Schlecht-Signal liefert. Eine genauere Messung, hinsichtlich der Stärke einer Neigung, ist jedoch mit diesem Verfahren nicht möglich.

Ferner ist in dem deutschen Gebrauchsmuster G 86 00 118 eine Vorrichtung zur Mündungsprüfung von sich entlang einer Bahn bewegenden Behältern beschrieben. Die Vorrichtung weist einen Prüfkopf auf, der in eine Arbeitsstellung über die Mündung senkbar ist. In der Arbeitsstellung dreht sich der Prüfkopf um die Mündung und sendet dabei Licht waagerecht über einen Mündungsrand aus. Das Licht wird durch ein teilweise in die Mündung eingetauchtes erstes Umlenkelement nach oben hin umgelenkt und durch ein optisches System auf Fotoempfänger projiziert. Durch Auswertung der Ausgangssignale der Fotoempfänger können Unregelmäßigkeiten der Mündung festgestellt werden. Diese Vorrichtung ist aufwendig. Insbesondere ist bei dieser Vorrichtung vorgesehen, dass die Behälter zur Durchführung des Prüfvorgangs angehalten werden. Eine Prüfung der Behälter im bewegten Zustand würde das Prüfverfahren, insbesondere eine Zentrierung des Prüfkopfes, sehr erschweren.

Aus der DE 38 34 986 A1 ist eine Vorrichtung zum kontinuierlichen Erfassen des Füllvolumens von Flüssigkeiten in Behältern, insbesondere in liegend installierten zylindrischen Behältern im Tankstellenbereich, bekannt. Die Vorrichtung ist so ausgelegt, dass sie auch die Neigung des Behälters messtechnisch erfasst und in Bezug auf das real vorhandene Flüssigkeitsvolumen berücksichtigt. Dazu weist die Vorrichtung ein Schwimmersystem mit Schwimmkörpern auf, die schwenkbar in Bezug auf ein von oben in die Flüssigkeit hineinragendes Führungsrohr sind, um sich an die Winkelstellung des Führungsrohrs gegenüber der Flüssigkeitsoberfläche anpassen zu können. Der Winkel zwischen der Flüssigkeitsoberfläche gegenüber einer Bezugsfläche des Behälters wird mit einem handelsüblichen Neigungsgeber (Inklinometer) elektrisch erfasst. Die bekannte Vorrichtung dient nicht dazu, den Behälter auf eine mögliche außerhalb eines Toleranzbereiches liegende, inhärente Neigung seiner Mündung hin zu überprüfen, sondern vielmehr dazu, eine statische oder dynamische Neigung des gesamten Behälters zur Bestimmung des enthaltenen Flüssigkeitsvolumens festzustellen. Dazu muss der Behälter mit einer Flüssigkeit gefüllt sein.

Außerdem ist aus der EP-A-0 293 226 bekannt, eine an einem Andruckkopf befestigte Prüfplatte an die Mündung einer Flasche anzulegen und mit mehreren magnetischen Sensoren die lokale Position der Prüfplatte zu messen. Aus den Meßwerten wird eine Ebenengleichung berechnet, die für die Bestimmung der Neigung verwendet wird. Wenn eine fehlerhafte Neigung der Mündung festgestellt wird wird die entsprechende Flasche durch einen Aktor ausgesondert. Das Halten und Zentrieren der Flasche erfolgt bei dieser Vorrichtung nicht durch den Andruckkopf.

Der Erfindung liegt daher die Aufgabe zugrunde, eine gattungsgemäße Vorrichtung zur Verfügung zu stellen, die einen hohen Durchsatz an Behältern ermöglicht.

Diese Aufgabe wird durch die Merkmale des Anspruchs 1 gelöst.

Die Vorrichtung weist einen Andruckkopf auf, der auf den in die Vorrichtung gelangten Behälter gesenkt werden kann und Mittel zum Halten des Behälters und zum Zentrieren des Behälters gegenüber dem Andruckkopf aufweist.
Wenn die Halte- und Zentriermittel den Behälter greifen, wird ein Prüfteil des Andruckkopfes, das in Bezug auf seine Winkelstellung relativ zur horizontalen Ebene, beispielsweise aufgrund eines Gelenkelements, beweglich ist, auf die Mündung gedrückt, wodurch das Prüfteil aufgrund seiner flexiblen Aufhängung in seiner Winkelstellung relativ zur horizontalen Ebene mit der Mündungsneigung korreliert. Der Einfachheit halber wird im Folgenden davon ausgegangen, dass der zu prüfende Behälter senkrecht steht, so dass optimalerweise die Mündung bzw. die Ebene der Mündung horizontal ausgerichtet ist. Die Vorrichtung weist ferner Mittel zum Abtasten der Winkelstellung des Prüfteils relativ zur horizontalen Ebene auf und eine Auswerteeinheit, die aus bei Korrelierung des Prüfteils mit der Mündungsneigung erhaltenen Messwerten der Abtastmittel ein Informationssignal bezüglich der Mündungsneigung erzeugt. Ferner weist die Vorrichtung einen Aktor auf, der durch die Auswerteeinheit so steuerbar ist, dass er den Behälter aussondert, wenn das Informationssignal jenseits eines zulässigen Schwellenwerts liegt.

Dadurch, dass das Prüfteil, wenn es auf die Mündung aufgelegt ist, in seiner Winkelstellung relativ zur horizontalen Ebene mit der Mündungsneigung korreliert, kann durch Erfassung der Winkelstellung mit Hilfe der Abtastmittel auf den Winkel der Mündungsebene relativ zur horizontalen Ebene geschlossen werden. Für die Bestimmung der Winkelstellung des Prüfteils relativ zur horizontalen Ebene muss ein bestimmter Winkel zwischen einem Abschnitt des Prüfteils und der horizontalen Ebene definiert werden.

Die erfindungsgemäße Vorrichtung erlaubt aufgrund des Abtastprinzips einen hohen Durchsatz von Behältern. So können beispielsweise 200 bis 300 Glasflaschen pro Minute geprüft werden.

Das Prüfteil definiert vorzugsweise eine untere und eine gegenüberliegende obere Ebene, wobei das Prüfteil mit der unteren Ebene auf die Mündung gedrückt wird und die Mittel zum Abtasten der Winkelstellung des Prüfteils relativ zur horizontalen Ebene so ausgelegt sind, dass sie die Winkelstellung der oberen Ebene relativ zur horizontalen Ebene abtasten. Auch eine Abtastung der unteren Ebene wäre jedoch möglich. Wenn das Prüfteil auf die Mündung aufgelegt ist, weist es bezüglich seiner unteren Ebene die gleiche Neigung wie die Mündung auf, wodurch der Lichtstrahl bei vorhandener Neigung anders abgelenkt wird, als in dem Fall, dass keine Neigung bzw. nur eine Neigung innerhalb eines Toleranzbereichs gegeben ist. Die obere Ebene des Prüfteils ist vorzugsweise parallel zu der unteren Ebene. Bei dem Prüfteil kann es sich insbesondere um eine Prüfplatte handeln.

Bei dem Informationssignal der Auswerteeinheit kann es sich um ein Signal handeln, das lediglich zwei Werte aufweist, nämlich einen Wert, der einer "guten" Mündung entspricht, und einen Wert, der bei einer Mündung erhalten wird, die eine Neigung außerhalb eines vorgegebenen Toleranzbereichs aufweist und somit "schlecht" ist.

Die Abtastmittel können gemäß einer Ausführungsform der Erfindung einen Lichtsender zum Senden eines Lichtstrahls auf ein an dem Prüfteil befestigtes Spiegelelement aufweisen und einen Lichtempfänger zum Empfangen des von dem Spiegelelement reflektierten Lichtstrahls. Dabei wird in Abhängigkeit davon, ob der Lichtempfänger ein Lichtsignal empfängt, von der Auswerteeinheit das Informationssignal bezüglich des Vorhandenseins einer Neigung der Mündung erzeugt.

Vorzugsweise ist das Prüfteil eine Prüfplatte und das Spiegelelement auf einer Oberfläche der Prüfplatte befestigt.

Der Lichtempfänger kann als Einzelsensor so ausgebildet sein, dass er einen sensitiven Bereich besitzt, der nur dann von reflektiertem Licht getroffen wird, wenn dieses aus der Prüfung eines in Bezug auf seine Mündungsneigung im Toleranzbereich liegenden Behälters herrührt. Das bedeutet, dass immer dann, wenn kein Licht von dem Lichtempfänger detektiert wird, die Ablenkung des reflektierten Strahls so groß ist, dass eine nicht tolerable Neigung der Behältermündung vorliegt.

Der Lichtempfänger kann alternativ auch einen Sensorring aufweisen, der so angeordnet ist, dass im Normalfall der Lichtempfänger kein reflektiertes Licht detektiert. Nur dann, wenn der reflektierte Lichtstrahl so stark abgelenkt ist, dass er den vom Sensorring umgebenen Bereich verlässt, entsteht ein Detektionssignal. Je nach Größe des Sensorrings und dem durch ihn eingeschlossenen Bereich ergibt sich der in Bezug auf die Behältermündung vorgegebene Toleranzbereich.

Der Lichtempfänger kann ortsauflösend sein. Da der Reflexionswinkel, d.h. der Winkel zwischen dem Lot und dem reflektierten Lichtstrahl, ein Maß für die Mündungsneigung darstellt und der Ort des Auftreffens des reflektierten Strahls auf den Lichtempfänger vom Reflexionswinkel abhängt, kann mit einem ortsauflösenden Lichtempfänger der Winkel der Mündungsneigung bestimmt werden. Für solch einen Lichtempfänger kann beispielsweise ein Matrixempfänger in Form einer Matrixkamera oder auch ein positionsempfindlicher Si-Detektor (PSD) verwendet werden.

Bei dem Spiegelelement kann es sich um einen Spiegelring handeln. Ein Spiegelring ist dann vorteilhaft, wenn die erfindungsgemäße Vorrichtung Teil einer Vorrichtung ist, die zur Prüfung weiterer möglicher Defekte des Behälters ausgelegt ist, und bei solch einer Vorrichtung der Andruckkopf mit den Mitteln zum Halten des Behälters und zum Zentrieren des Behälters und dem Prüfteil vor Beginn des Prüfverfahrens auf den Behälter abgesenkt wird und anschließend der Behälter zusammen mit dem Andruckkopf und somit dem Prüfteil gedreht wird, bevor die oben beschriebene Prüfung der Mündungsneigung stattfindet. Solch eine Drehung des Behälters ist beispielsweise dann erforderlich, wenn die Seitenwand des Behälters auf mögliche Defekte hin überprüft wird. Aufgrund des Spiegelrings können trotz einer Drehung des Behälters zusammen mit dem aufgelegten Prüfteil der Lichtsender und der Lichtempfänger ortsfest sein.

Der Lichtsender kann z.B. so angeordnet sein, dass er den Lichtstrahl in einem spitzen Winkel zum Lot aussendet und der reflektierte Lichtstrahl direkt in den Lichtempfänger gelangt. Wenn die Ebene der Mündungsneigung parallel zur Ebene des Behälterbodens ist, schließt ein auf dem stehenden Behälter aufliegendes Prüfteil, das eine zueinander parallele untere und obere Ebene aufweist, mit dem Lot einen rechten Winkel ein, und der auftreffende Lichtstrahl und der reflektierte Lichtstrahl haben zum Lot betragsmäßig denselben Winkel. Alternativ kann der Lichtsender auch so angeordnet sein, dass er einen lotrechten Lichtstrahl aussendet, wobei im Strahlengang des Lichtstrahls ein teildurchlässiger Spiegel angeordnet ist, der vom Spiegelelement reflektiertes Licht zum Lichtempfänger lenkt.

Der Andruckkopf kann an einer Führungsstange befestigt sein, deren behälterseitiges Ende mit einem elastischen zylinderförmigen Halter zur flexiblen Aufhängung des Prüfteils verbunden ist. Bei dem zylinderförmigen Halter kann es sich beispielsweise um eine Spiralfeder oder auch um einen stangenförmigen Halter aus einem elastischen Material, beispielsweise Gummi, handeln. Das Prüfteil kann Durchgriffe für zentrierende Haltefinger bzw. Aussparungen für zentrierende Haltebacken des Andruckkopfes aufweisen.

Alternativ kann das Spiegelelement in einem Spiegelplättchen bestehen, das so auf dem Prüfteil angeordnet ist, dass es bei Aufliegen des Prüfteils auf der Mündung im Wesentlichen mittig zu dieser angeordnet ist. Um den Lichtsender versetzt zu der Hochachse des Behälters anordnen zu können, kann vor dem Lichtsender ein teildurchlässiger Spiegel angeordnet sein, der einen Teil des ausgesandten Lichts zu einem über dem Spiegelplättchen angeordneten Prisma reflektiert, das das Licht zu dem Spiegelplättchen lenkt. Im Folgenden wird die bevorzugte Ausführungsform beschrieben, dass dann, wenn keine Neigung der Mündung gegeben ist, das Spiegelplättchen folglich horizontal liegt und der Strahlengang des reflektierten Lichts bis zu dem teildurchlässigen Spiegel mit dem Strahlengang des einfallenden Lichts zusammenfällt. Das reflektierte Licht, das den teildurchlässigen Spiegel ohne Ablenkung, abgesehen vom Strahlversatz, passiert, fällt auf den entsprechend angeordneten Lichtempfänger. Sofern das Spiegelplättchen zur horizontalen Ebene geneigt ist, wird der Strahlengang des reflektierten Lichts von dem Strahlengang des einfallenden Lichts abweichen und den Lichtempfänger nicht in der Normalposition treffen. Anstelle des Prismas kann auch ein weiterer Spiegel verwendet werden.

Es ist auch möglich, den Lichtsender mittig oberhalb der Behältermündung anzuordnen, so dass das ausgesandte Licht entlang der Hochachse des Behälters verläuft. In diesem Fall kann einfach ein teildurchlässiger Spiegel im Strahlengang angeordnet sein, der reflektiertes Licht zu dem Lichtempfänger hin ablenkt.

Das Prisma oder der teildurchlässige Spiegel sind vorzugsweise in einem drehfesten Führungsrohr angeordnet, an dem der Andruckkopf drehbar befestigt ist, wobei das behälterseitige Ende des Führungsrohrs mit einer Spiralfeder zur flexiblen Aufhängung des Prüfteils verbunden ist. Auch bei dieser Anordnung sind vorzugsweise in dem Prüfteil Durchgriffe für zentrierende Haltefinger oder Aussparungen für zentrierende Haltebacken des Andruckkopfes vorgesehen.

Bei dem Lichtsender handelt es sich vorzugsweise um einen Laser.

Gemäß einer weiteren Ausführungsform der Erfindung können die Abtastmittel vorrichtungsfeste Abstandssensoren aufweisen, durch die während des Aufdrückens des Prüfteils auf den Behälter an wenigstens drei im Abstand voneinander angeordneten Messstellen des Prüfteils der Abstand des jeweiligen Abstandssensors von der zugehörigen Messstelle gemessen werden kann. Bei den Abstandssensoren handelt es sich um dem Fachmann bekannte, übliche Abstandssensoren, beispielsweise um induktive Abstandssensoren.

Es können beispielsweise drei Abstandssensoren vorgesehen sein, die symmetrisch mit einem jeweiligen Winkel von 120° zueinander oberhalb des Prüfteils, insbesondere einer Prüfplatte, in gleicher Höhe angeordnet sind. Sofern diese Abstandssensoren bei einer Prüfplatte unterschiedliche Abstandsmesswerte ergeben, liegt eine Neigung der Prüfplatte und somit auch der Behältermündung vor. Die Stärke der Neigung kann aus den drei Abstandsmesswerten ermittelt werden.

Wenn die Vorrichtung einen Drehteller aufweist, auf dem der zu prüfende Behälter steht, können auch drei oder mehr Abstandssensoren radial in einem Abstand zu dem Umfang des Drehtellers, also seitlich versetzt von dem Drehteller, angeordnet sein, um bei Drehung des Drehtellers und damit des Behälters den Abstand an drei verschiedenen Messstellen des Prüfteils zeitlich nacheinander messen zu können. Auch hierbei handelt es sich vorzugsweise bei dem Prüfteil um eine Prüfplatte. Diese Art der Anordnung der Abstandssensoren radial abseits des Prüfteils kann konstruktionstechnische Vorteile aufweisen.

Grundsätzlich kann es sich bei den zu prüfenden Behältern sowohl um Weithals- als auch Enghalsbehälter handeln. Wenn eine erfindungsgemäße Vorrichtung mit Abstandssensoren für Enghalsbehälter vorgesehen ist, können Haltefinger oder Haltebacken des Andruckkopfes wie bei der obigen, einen Lichtsender verwendenden Ausführungsform vorhanden sein, die von oben durch Durchgriffe oder Aussparungen des Prüfteils hindurch die Behältermündung halten und zentrieren. Bei der Prüfung von Weithalsbehältern können aufgrund des größeren Umfangs der Mündung auch Stifte vorgesehen sein, die zum Zentrieren und zum Halten der Behältermündung so mit einer Druckfeder beaufschlagt werden können, dass sie gegen eine Innenfläche des Behälters an dessen Mündung drücken. Diese Stifte können an ihrem mündungsseitigen Ende abgeschrägt sein, so dass sie beim Aufdrücken des Prüfteils selbsttätig in Eingriff mit der Behältermündung gelangen.

Das Prüfteil kann insbesondere bei der die Abstandssensoren aufweisenden Ausführungsform allseitig drehbar gelagert sein, um sich einerseits an die Mündungsebene anpassen zu können und sich andererseits auch um die mittige Hochachse drehen zu können. Es ist aber auch eine Aufhängung mittels des elastischen zylinderförmigen Halters möglich, wie er oben, in Verbindung mit der einen Lichtsender aufweisenden Ausführungsform beschrieben ist.

Die erfindungsgemäße Vorrichtung kann sowohl bei einer vorgesehenen Abtastung mittels eines Lichtsenders als auch mittels Abstandssensoren so ausgelegt sein, dass während des Aufdrückens des Prüfteils auf die Mündung ein Unter- oder ein Überdruck in einem Innenraum des Behälters erzeugt werden kann, wobei der in dem Innenraum sich ausbildende Druck mit einem Drucksensor gemessen werden und ein entsprechendes Messsignal in die Auswerteeinheit gegeben werden kann. Dabei wird das Messsignal dahingehend ausgewertet, dass der Behälter durch den Aktor ausgesondert wird, wenn das Messsignal jenseits eines zulässigen Schwellenwerts liegt. Auf diese Weise ist es möglich, weitere mögliche Defekte der Behältermündung über eine mögliche Neigung hinaus zu detektieren. Solche möglichen weiteren Defekte können beispielsweise Kerben in der Oberfläche der Behältermündung, eine sattelartige Ausbildung der Oberfläche der Behältermündung oder eine nicht kreisrunde Form der Behältermündung sein. Um bestimmte mögliche Defekte der Behältermündung erfassen zu können, kann das Prüfteil auch eine entsprechende darauf abgestimmte Form aufweisen, beispielsweise die Form eines Hütchens, dessen kegelförmige Wandung auch zum Halten und Zentrieren des Behälters dienen würde. Die Druckmessung kann in Form einer Differenzdruckmessung erfolgen.

Die erfindungsgemäße Vorrichtung ist vorzugsweise so ausgelegt, dass die zu prüfenden Behälter durch eine Transportvorrichtung kontinuierlich hintereinander stehend entlang einer Bahn bewegbar sind. Auf einem Teil der Bahn sind vorzugsweise mehrere Kontakteinheiten vorgesehen, die jeweils einen Andruckkopf mit einem Prüfteil aufweisen. Die Bahn ist vorzugsweise in dem Bereich, wo die Prüfung der Behälter stattfindet, kreisförmig, sie kann jedoch auch linear sein.

Die Vorrichtung eignet sich insbesondere dazu, in eine Vorrichtung zur Prüfung auf weitere mögliche Defekte eines Behälters, insbesondere Defekte der Seitenwand und des Bodens, integriert zu werden. Bei einer solchen Vorrichtung kann vorgesehen sein, dass der Behälter in einer kontinuierlich bewegten Bahn von Behältern unter anderem auf einem Drehteller geführt wird und dabei stehend auf einer drehbaren Bodenplatte des Drehtellers angeordnet und an der Mündung durch einen drehbaren Andruckkopf gehalten wird, um für die Seitenwandprüfung um die eigene Achse gedreht zu werden. Im Anschluss an diese Prüfung kann die oben beschriebene Prüfung auf eine mögliche Neigung der Behältermündung durchgeführt werden.

Im Folgenden wird die Erfindung anhand von Ausführungsbeispielen näher erläutert, wobei auf die Figuren Bezug genommen wird. Es zeigen:
Fig. 1 eine Teilansicht einer ersten Ausführungsform der Vorrichtung mit auf einer Flaschenmündung aufliegender Prüfplatte,
Fig. 2 eine Schnittansicht entlang der Linie A-A in Fig. 1,
Fig. 3 eine bei der Vorrichtung gemäß Fig. 1 verwendete Anordnung von Lichtsender und Lichtempfänger mit dem Strahlengang bei nicht vorhandener Mündungsneigung,
Fig. 4 den Strahlengang bei der Anordnung von Lichtsender und Lichtempfänger gemäß Fig. 3, wenn die Behältermündung geneigt ist,
Fig. 5 eine alternative bei der Vorrichtung gemäß Fig. 1 verwendete Anordnung von Lichtsender und Lichtempfänger mit dem Strahlengang bei nicht vorhandener Mündungsneigung,
Fig. 6 den Strahlengang bei der Anordnung von Lichtsender und Lichtempfänger gemäß Fig. 5, wenn die Behältermündung geneigt ist,
Fig. 7 eine Teilansicht einer zweiten Ausführungsform der Vorrichtung mit auf einer Flaschenmündung aufliegender Prüfplatte,
Fig. 8 eine Teildarstellung des Andruckkopfes gemäß Fig. 7 in Draufsicht,
Fig. 9 eine bei der Vorrichtung gemäß Fig. 7 verwendete Anordnung von Lichtsender und Lichtempfänger,
Fig. 10 eine alternative bei der Vorrichtung gemäß Fig. 7 verwendete Anordnung von Lichtsender und Lichtempfänger,
Fig. 11 eine Teilansicht einer dritten Ausführungsform der Vorrichtung mit einer auf einer Mündung eines Weithalsbehälters aufliegenden Prüfplatte,
Fig. 12 eine Draufsicht auf die Vorrichtung gemäß Fig. 11 gemäß der Linie B-B,
Fig. 13 eine Teilschnittansicht entlang der Linie C-C in Fig. 12,
Fig. 14 einen Drehteller zur Aufnahme von mehreren Behältern, die auf Dichtheit und eine mögliche Neigung ihrer Mündung mittels Abstandssensoren geprüft werden sollen,
Fig. 15 eine zu der Aufhängung gemäß Fig. 13 alternative Art der Aufhängung der Prüfplatte,
Fig. 16 eine schematische Darstellung der Anordnung von drei Abstandssensoren oberhalb einer Prüfplatte bei dem Drehteller gemäß Fig. 14,
Fig. 17 eine Schnittansicht entlang der Linie D-D in Fig. 16 und
Fig. 18 eine Vorrichtung, die zur Prüfung von sich entlang einer Bahn bewegenden Behältern auf verschiedene mögliche Defekte vorgesehen ist.

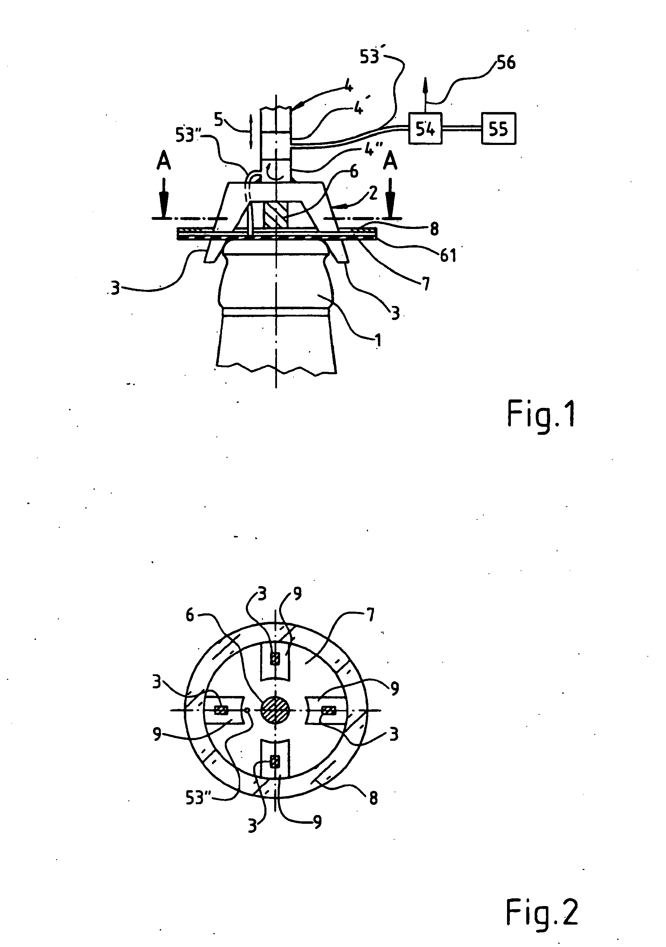

Fig. 1 zeigt die Mündung 1 eines Behälters, hier einer Flasche. Die Flasche wird an ihrer Mündung 1 durch einen Andruckkopf 2, der vier Haltefinger 3 aufweist, mit diesen auf einer nicht gezeigten Bodenplatte zentriert und gehalten. Der Andruckkopf 2 ist an einer drehbaren Führungsstange 4 befestigt und über diese gemäß Pfeil 5 heb- und senkbar. An einem behälterseitigen Ende der Führungsstange 4 ist diese mit einem stangenförmigen Halter 6 aus Gummi zur flexiblen Aufhängung einer Prüfplatte 7 verbunden. Die Prüfplatte 7 weist einen Spiegel in Form eines Ringes 8 auf, der auf dem Umfang der Prüfplatte 7 befestigt ist, sowie auf ihrer Unterseite eine Gummidichtung 61. Wie insbesondere aus Fig. 2 ersichtlich ist, besitzt die Prüfplatte 7 Durchgriffe 9 für die Haltefinger 3.

Die Prüfplatte 7 wird über die Führungsstange 4 und den stangenförmigen Halter 6 mit der Gummidichtung 61 auf die Ebene der Mündung 1 aufgedrückt.

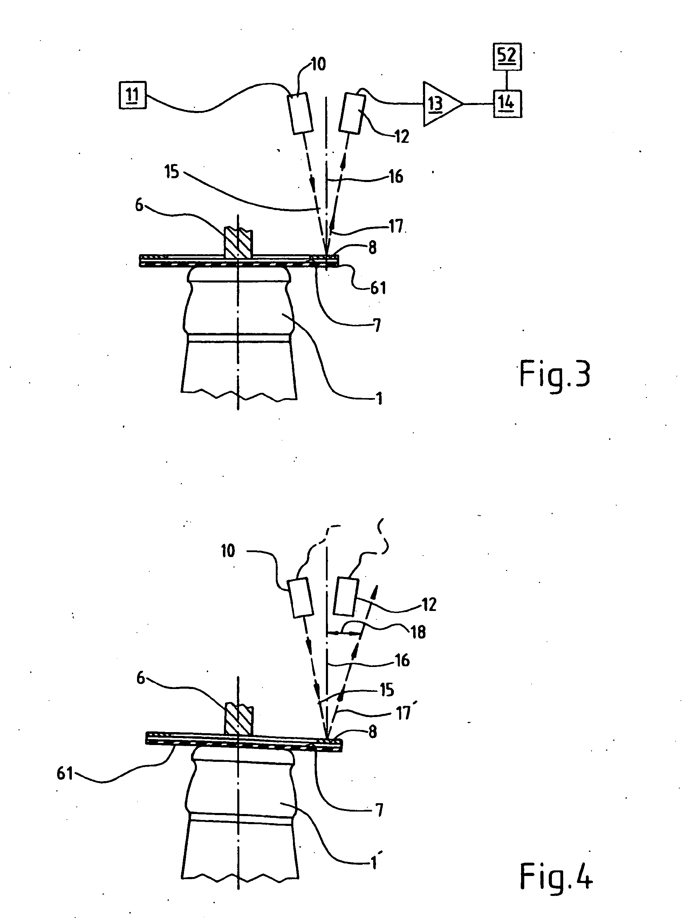

Die Führungsstange 4 weist einen rotationsfesten Abschnitt 4' und einen drehbaren Abschnitt 4" auf. Ein flexibler Luftkanalabschnitt 53' mündet in den rotationsfesten Abschnitt 4' der Führungsstange 4, und ein weiterer flexibler Luftkanalabschnitt 53" führt von dem drehbaren Abschnitt 4" der Führungsstange 4 durch den Andruckkopf mit der Prüfplatte 7 hindurch zu dem Behälter 1. Der flexible Luftkanalabschnitt 53' ist über einen Drucksensor 54 mit einer Vorrichtung 55 zur Erzeugung eines Über- oder Unterdrucks verbunden. Der Drucksensor 54 ist über eine Signalleitung, die durch den Pfeil 56 angedeutet ist, mit einer Auswerteeinheit 14 (siehe Fig. 3) verbunden.

In Fig. 3 ist eine Sensoreinheit der Prüfvorrichtung dargestellt. Zu dieser Sensoreinheit, die ortsfest sein kann, gehören ein Laser als Lichtsender 10, der über eine Senderansteuerung 11 angesteuert wird, und ein Lichtempfänger 12, dessen Ausgangssignale über einen Verstärker 13 einer Auswerteeinheit 14 zugeführt werden. Die Auswerteeinheit 14 liefert ein Informationssignal, aufgrund dessen die Auswerteeinheit 14 einen Aktor in Form eines Auswerfers 52 ansteuern kann, der einen defekten Behälter aus dem Produktionszyklus herausnimmt.

Der Lichtsender 10 ist so angeordnet, dass er einen Lichtstrahl 15 in einem spitzen Winkel zu dem Lot 16 aussendet. Der Lichtstrahl 15 trifft auf den Spiegelring 8 und wird von diesem reflektiert. Da die in Fig. 3 dargestellte Behältermündung 1 keine Neigung besitzt, wird aufgrund der Reflexion durch den Spiegelring 8 ein Lichtstrahl 17 erzeugt, der mit dem Lot 16 betragsmäßig den gleichen Winkel wie der ausgesandte Lichtstrahl 15 einschließt. Der Lichtstrahl 17 trifft daher mittig auf den Lichtempfänger 12.

Der Lichtempfänger 12 weist mittig eine nicht gezeigte Sensorfläche auf, die dann von einem reflektierten Lichtstrahl getroffen wird, wenn die Behältermündung 1 nicht geneigt ist und der Lichtstrahl somit, wie der gezeigte Lichtstrahl 17, von einem Spiegelring 8 reflektiert wird, der exakt bzw. innerhalb eines Toleranzbereichs in der horizontalen Ebene liegt. In Fig. 4 ist zum Vergleich die Richtung eines reflektierten Lichtstrahls 17' innerhalb derselben Sensoreinheit für den Fall dargestellt, dass eine Behältermündung 1' eine Neigung aufweist. Durch die Neigung der Behältermündung 1' und die daraus resultierende entsprechende Neigung des Spiegelrings 8 gegenüber der horizontalen Ebene ist der Reflexionswinkel 18 des reflektierten Lichtstrahls 17', d.h. der Winkel zwischen dem Lot 16 und dem reflektierten Lichtstrahl 17', größer als der Winkel zwischen dem auf den Spiegelring 8 treffenden Lichtstrahl 15 und dem Lot 16. Infolgedessen trifft der reflektierte Lichtstrahl 17' nicht auf den Lichtempfänger 12. Da der Lichtempfänger 12 dementsprechend kein Ausgangssignal an die Auswerteeinheit 14 sendet, gibt diese ein entsprechendes Ansteuersignal an den Auswerfer 52 zum Herausnehmen der Flasche mit der nicht mehr tolerablen Behältermündung 1'.

Alternativ könnte der Lichtempfänger 12 auch einen Sensorring aufweisen. In diesem Fall würde der bei Vorliegen einer nicht geneigten Behältermündung reflektierte Lichtstrahl 17 auf den von dem Sensorring umgebenen Bereich treffen, so dass der Lichtempfänger 12 kein Detektionssignal an die Auswerteeinheit 14 aussendet. Erst wenn eine Neigung einer Behältermündung vorläge, die so groß ist, dass der reflektierte Lichtstrahl auf den Sensorring gelangt, würde ein Detektionssignal von dem Lichtempfänger 12 ausgesandt. Bei dieser Art des Lichtempfängers wäre somit die Struktur des Ausgangssignals des Lichtempfängers 12 invers zu dem Ausgangssignal des in den Fig. 3 und 4 dargestellten Lichtempfängers 12.

In allen Figuren sind gleiche bzw. entsprechende Teile mit denselben Bezugszahlen versehen.

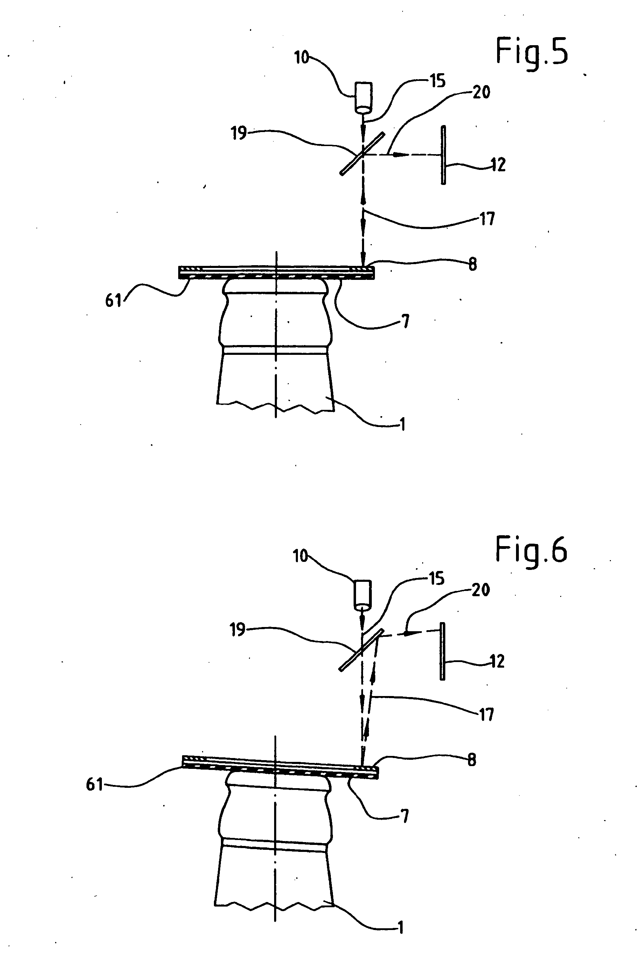

In den Fig. 5 und 6 ist eine alternative Sensoreinheit zur Verwendung bei der Vorrichtung gemäß den Fig. 1 und 2 dargestellt. Bei der Sensoreinheit gemäß Fig. 5 trifft der von dem Lichtsender 10 ausgesandte Lichtstrahl 15 zunächst auf einen teildurchlässigen Spiegel 19. Ein Teil des auftreffenden Lichts tritt ohne Ablenkung, abgesehen vom Strahlversatz, durch den Spiegel 19 hindurch und trifft auf den Spiegelring 8. Der durch Ablenkung des Spiegels 19 entstandene Teilstrahl des Lichtstrahls 15 ist in Fig. 5 nicht dargestellt. Die in Fig. 5 gezeigte Behältermündung 1 weist keine Neigung auf. Somit wird der auf den Spiegelring 8 auftreffende Lichtstrahl in sich selbst reflektiert und trifft an derselben Stelle auf den Spiegel 19 wie der ursprünglich ausgesandte Lichtstrahl 15. Ein Teil des reflektierten Lichtstrahls 17 wird von dem Spiegel 19 rechtwinklig als Teilstrahl 20 abgelenkt. Der Teilstrahl 20 trifft auf einen ortsauflösenden Lichtempfänger 12. Bei diesem Lichtempfänger 12 kann es sich um einen Matrixempfänger oder einen positionsempfindlichen Si-Detektor (PSD) handeln. Wie aus Fig. 6 ersichtlich ist, fällt der bei vorhandener Mündungsneigung reflektierte Lichtstrahl 17' nicht mit dem auf den Spiegelring 8 auftreffenden Lichtstrahl 15 zusammen, sondern wird in einem Winkel zu diesem reflektiert. Der teildurchlässige Spiegel 19 lenkt einen Teil des reflektierten Lichtstrahls 17 zu einem Teilstrahl 20' ab, der einen von 90° verschiedenen Winkel zu dem Lichtstrahl 17' aufweist und somit an einer anderen Stelle auf den Lichtempfänger 12 auftritt als der Lichtstrahl 20. Die Auftreffposition des Lichtstrahls 20 bzw. 20' ist somit auf einfache Weise mit der Neigung des Spiegelrings 8 und somit der Neigung der Behältermündung 1 bzw. 1' korreliert.

Die Prüfvorrichtung gemäß den Fig. 1 und 2 dient ferner zur Prüfung von Behältern auf Dichtheit. Dazu wird über die Vorrichtung 55 ein Über- oder Unterdruck in dem Innenraum des Behälters erzeugt. Als Messverfahren wird eine Differenzdruckmessung verwendet. Die Differenz des Druckes der Druckquelle und des durch den Drucksensor 54 gemessenen Druckes im Behälterinnenraum gibt Aufschluss darüber, ob sich der Druck in dem Innenraum des Behälters abbaut bzw. übermäßig schnell abbaut. Da zwischen der Behältermündung 1 und der Prüfplatte 7 eine Dichtung vorgesehen ist, ist allenfalls ein geringer Abbau des Druckes in dem Behälterinnenraum normal. Ein darüber hinausgehender Abbau des Druckes lässt hingegen darauf schließen, dass die Behältermündung 1 Mängel wie die oben beschriebenen aufweist, die zu einem zusätzlichen Druckabbau führen. Die mittels des Drucksensors 54 erhaltenen Druckmesswerte werden an die Auswerteeinheit 14 weitergeleitet, die bei Überschreiten eines zulässigen Schwellenwerts den Auswerfer 52 ansteuern.

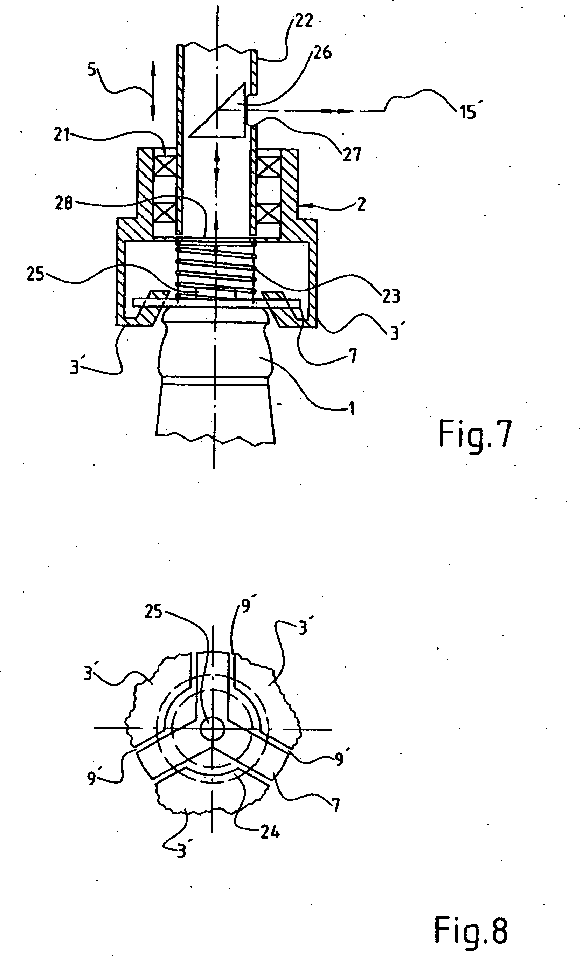

Bei der Ausführungsform der Prüfvorrichtung gemäß Fig. 7 ist ein Andruckkopf 2 vorgesehen, der mittels eines Wälzlagers 21 drehbar an einem drehfesten Führungsrohr 22 befestigt ist. Das Führungsrohr 22 ist wie die Führungsstange 4 heb- und senkbar. Der Andruckkopf 2 weist Haltebacken 3' zum Zentrieren und Halten einer Flaschenmündung 1 auf.

Das Führungsrohr 22 ist an einem behälterseitigen Ende mit einer Spiralfeder 23 verbunden. Die Spiralfeder 23 dient zur Befestigung und zum Andrücken der Prüfplatte 7. Wie insbesondere aus Fig. 8 ersichtlich ist, weist die Prüfplatte 7 Aussparungen 9' auf, in denen die Haltebacken 3' liegen. Mit dem Bezugszeichen 24 ist in Fig. 8 der obere Rand der Behältermündung 1 bezeichnet.

Auf der Prüfplatte 7 ist mittig und somit innerhalb der Spiralfeder 23 ein Spiegelplättchen 25 angebracht. Ferner ist innerhalb des Führungsrohrs 22 ein Prisma 26 befestigt. Das Prisma 26 liegt mit einer Kathetenfläche vor einer Öffnung 27 des Führungsrohrs 22. Ferner weist der Andruckkopf 2 einen Durchlass 28 oberhalb der Spiralfeder 23 auf.

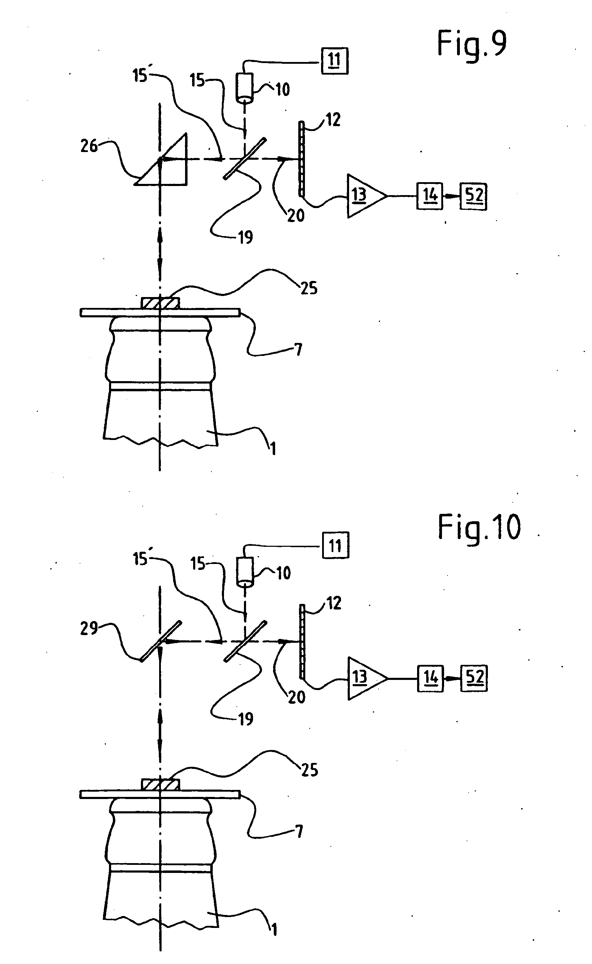

In Fig. 9 ist eine bei der Vorrichtung gemäß Fig. 7 verwendete Sensoreinheit dargestellt. Ein Lichtstrahl 15, der von dem Lichtsender 10 ausgesandt wird, trifft auf einen teildurchlässigen Spiegel 19. Ein von dem Spiegel 19 reflektierter Teilstrahl 15' trifft auf das Prisma 26 und wird von diesem um 90° auf das Spiegelplättchen 25 umgelenkt.

Wenn die Behältermündung 1 nicht geneigt ist, wird der auf das Spiegelplättchen 25 treffende Lichtstrahl 15' in sich reflektiert und trifft an derselben Stelle auf den Spiegel 19 wie der Lichtstrahl 15. Der durch den Spiegel 19 hindurchtretende Teilstrahl 20 trifft auf den Lichtempfänger 12. Bei dem Lichtempfänger 12 handelt es sich um einen Matrixempfänger. Wie bei der Sensoreinheit gemäß der Fig. 5 und 6 hängt auch bei dieser Sensoreinheit die Auftreffposition des Lichtstrahls 20 auf den Lichtempfänger 12 von der Neigung der Behältermündung 1 ab. Nur wenn die Behältermündung 1 wie dargestellt keine Neigung aufweist, trifft der Lichtstrahl 20 mittig auf den Lichtempfänger 12.

In Fig. 10 ist eine Sensoreinheit dargestellt, die sich von der Sensoreinheit gemäß Fig. 9 nur dadurch unterscheidet, dass anstelle des Prismas 26 ein teildurchlässiger Spiegel 29 verwendet ist. Alternativ könnte bei der Verwendung eines solchen teildurchlässigen Spiegels 29 der Lichtsender 10 auch unversetzt oberhalb des Spiegels 29 angeordnet sein. In diesem Fall würde der durch den Spiegel 29 hindurchtretende Teilstrahl des ausgesandten Lichtstrahls auf das Spiegelplättchen 25 treffen und der von dem Spiegelplättchen 25 reflektierte Lichtstrahl von dem Spiegel 29 direkt auf den Lichtempfänger 12 gelenkt werden. Der Spiegel 19 ist bei einer solchen Sensoreinheit nicht erforderlich.

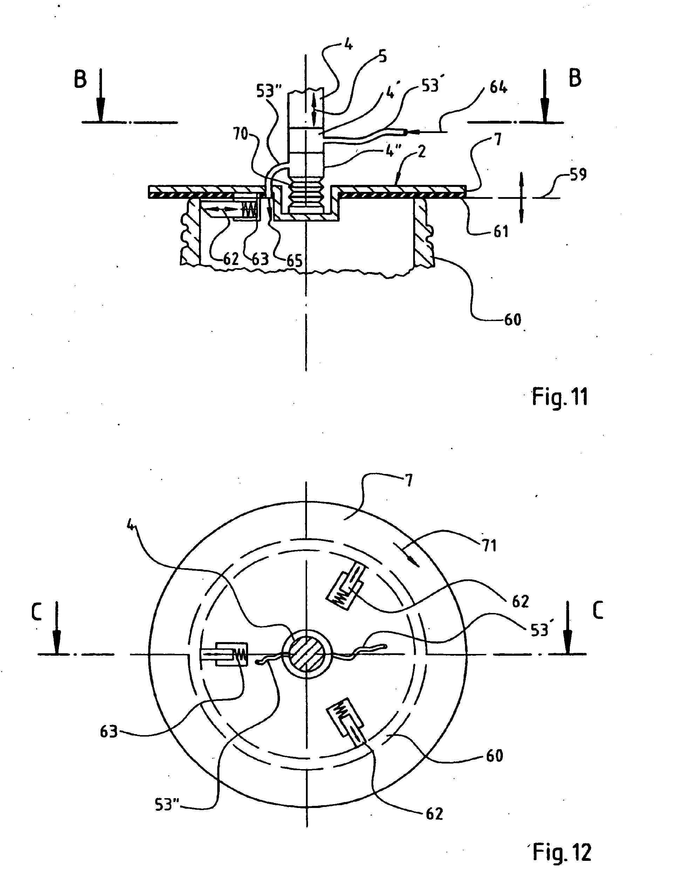

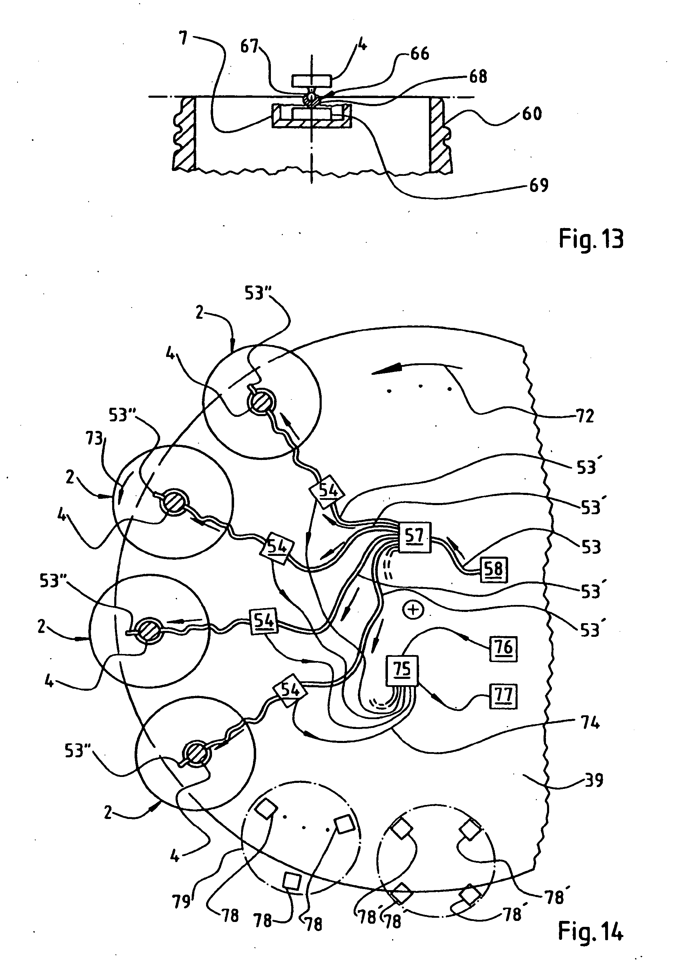

Fig. 11 zeigt die Mündung 60 eines Weithalsbehälters. Ein Andruckkopf 2 ist an einer drehbaren Führungsstange 4 befestigt und über diese gemäß Pfeil 5 hebund senkbar. Ein Prüfteil 7, das abgesehen von einem mittleren Abschnitt eben ist und daher im Folgenden als Prüfplatte bezeichnet wird, ist als Teil des Andruckkopfes 2 an der Führungsstange 4 flexibel befestigt, wie unten anhand von Fig. 13 näher erläutert wird. Die Prüfplatte 7 weist an ihrer Unterseite eine Gummidichtung 61 auf. Mit dieser Gummidichtung 61 liegt die Prüfplatte 7 auf dem Rand der Behältermündung 60 auf.

An der Unterseite der Prüfplatte 7 sind ferner drei Halte- und Zentrierstifte 62 befestigt. Diese Halte- und Zentrierstifte sind über jeweils eine Druckfeder 63 druckbeaufschlagt. Die Halte- und Zentrierstifte 62 sind, wie in Fig. 12 zu sehen ist, symmetrisch mit jeweils einem Winkel von 120° zueinander so angeordnet, dass sie in Betätigungslage mit ihrem freien Ende gegen die Innenwandung der Mündung 60 anliegen und diese halten und gegenüber dem Andruckkopf 2 zentrieren. Die Halte- und Zentrierstifte 62 gelangen beim Aufdrücken des Andruckkopfes 2 dadurch in Eingriff mit der Innenwandung der Mündung 60, dass sie an ihrem freien Ende eine schräge Kante 62' aufweisen, mit welcher der Stift 62 entlang der Mündungsoberkante gleitet.

Die Führungsstange 4 weist entsprechend Fig. 1 einen rotationsfesten Abschnitt 4' und einen drehbaren Abschnitt 4" auf. Ferner sind wiederum flexible Luftkanalabschnitte 53' und 53" vorgesehen, über die Druckluft durch die Prüfplatte 7 und die Gummidichtung 61 hindurch in den Innenraum des Behälters geführt werden kann, wie durch die Pfeile 64 und 65 angedeutet ist. Alternativ kann über die flexiblen Luftkanalabschnitte 53' und 53" ein Unterdruck in dem Innenraum des Behälters erzeugt werden.

In Fig. 13 ist die flexible Aufhängung der Prüfplatte 7 durch eine im Wesentlichen auf den Bereich der Aufhängung beschränkte Schnittansicht dargestellt. Ein Gelenkelement 66 weist ein kugelförmiges Teil 67 und ein Aufnahmeteil 68 auf. In dem Aufnahmeteil 68 ist das kugelförmige Teil 67 so gelagert, dass es in alle Richtungen drehbar ist. Das Aufnahmeteil 68 ist über einen Sockel 69 an der Prüfplatte 7 befestigt. Ein in Fig. 11 gezeigter Balg 70 schützt das Gelenkelement 66 vor Verschmutzungen. Bei dieser Aufhängung befindet sich vorteilhafterweise der Drehpunkt für die horizontale Ablenkung in der gleichen Ebene wie die Oberkante der Behältermündung 60. Eine Kippachse ist in Fig. 11 mit dem Bezugszeichen 59 bezeichnet.

Wie in Fig. 12 durch den Pfeil 71 angedeutet ist, kann die Prüfplatte 7, wenn sie auf den Behälter aufgedrückt ist, mit diesem mitgedreht werden, sofern dies erforderlich ist.

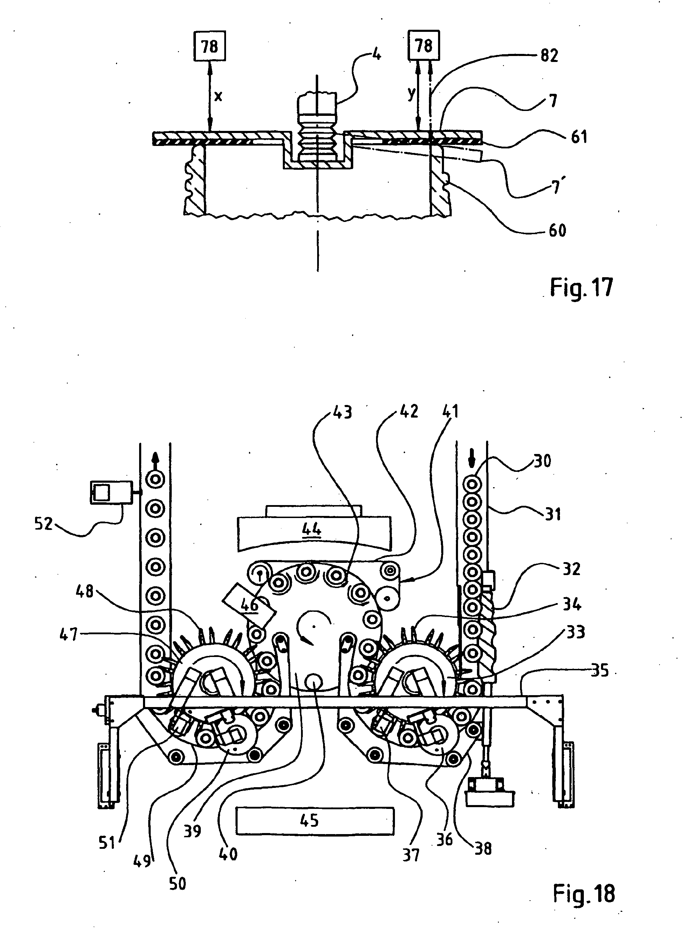

Fig. 14 zeigt einen Drehteller 39, der Teil einer Vorrichtung zur Prüfung weiterer möglicher Defekte eines Behälters sein kann, wobei die Behälter stehend auf dem Drehteller 39 angeordnet und entlang einem Kreisbogenabschnitt gemäß Pfeil 72 durch den Drehteller 39 geführt werden. Es kann dabei vorgesehen sein, dass die Behälter auf drehbaren Bodenplatten (siehe Fig. 18) stehen, so dass die Behälter zur Prüfung um die eigene Achse gedreht werden können. Über dem Drehteller 39 ist über einen überwiegenden Teil des Kreisumfangs des Drehtellers 39 eine Reihe von Andruckköpfen 2 angeordnet. Ein Teil dieser Andruckköpfe 2, die jeweils für einen aufzunehmenden Behälter vorgesehen sind, ist in Fig. 14 gezeigt. Die Andruckköpfe 2 sind drehbar, wie durch Pfeil 73 angedeutet ist. Die Andruckköpfe 2 sind durch eine Drucklufteinführung 58, einen flexiblen Luftkanal 53, einen Druckluftverteiler und -speicher 57 und flexible Luftkanalabschnitte 53' mit einer nicht gezeigten Vorrichtung zur Erzeugung eines Über- oder Unterdrucks verbunden. In dem flexiblen Luftkanalabschnitt 53' ist jeweils ein Drucksensor 54 angeordnet. Jeder Drucksensor 54 ist durch eine Signalleitung 74 mit einer Messwertaufbereitungseinheit 75 verbunden. Das gesamte oben beschriebene System von Andruckköpfen 2 und der Mittel zur Zuführung von Druckluft ist synchron zu dem Drehteller 39 drehbar, damit die Andruckköpfe 2, wenn sie auf die jeweilige Behältermündung 60 aufgedrückt sind, mit den Behältern mitgedreht werden können. Dementsprechend ist die Drucklufteinführung 58 drehbar, und es sind eine für die Drehung ausgelegte Spannungsversorgung 76, die z.B. Schleifringe aufweisen kann, und Mittel 77 zur drahtlosen Übertragung von Messsignalen an eine nicht gezeigte Auswerteeinheit 14 vorgesehen.

Es kann auch vorgesehen sein, dass anstelle von Überdruck ein Unterdruck in dem Innenraum des jeweiligen Behälters erzeugt wird.

Oberhalb des Drehtellers 39 sind als ortsfeste Sensoreinheit drei Abstandssensoren 78 angeordnet, die ausgelegt sind, um den Abstand zwischen den Abstandssensoren 78 und einer vorgegebenen Messstelle der Prüfplatte 7 zu messen. Zur Verdeutlichung der Anordnung der Abstandssensoren 78 ist bei 79 strichpunktiert die Umfangslinie eines zum Zeitpunkt der vorgesehenen Abstandsmessung sich unterhalb der Abstandssensoren 78 befindenden Andruckkopfes 2 dargestellt. Es können alternativ auch vier Abstandssensoren vorgesehen sein. Diese Variante ist in Fig. 14 zur Verdeutlichung zusätzlich eingezeichnet, wobei die Abstandssensoren mit dem Bezugszeichen 78' bezeichnet sind.

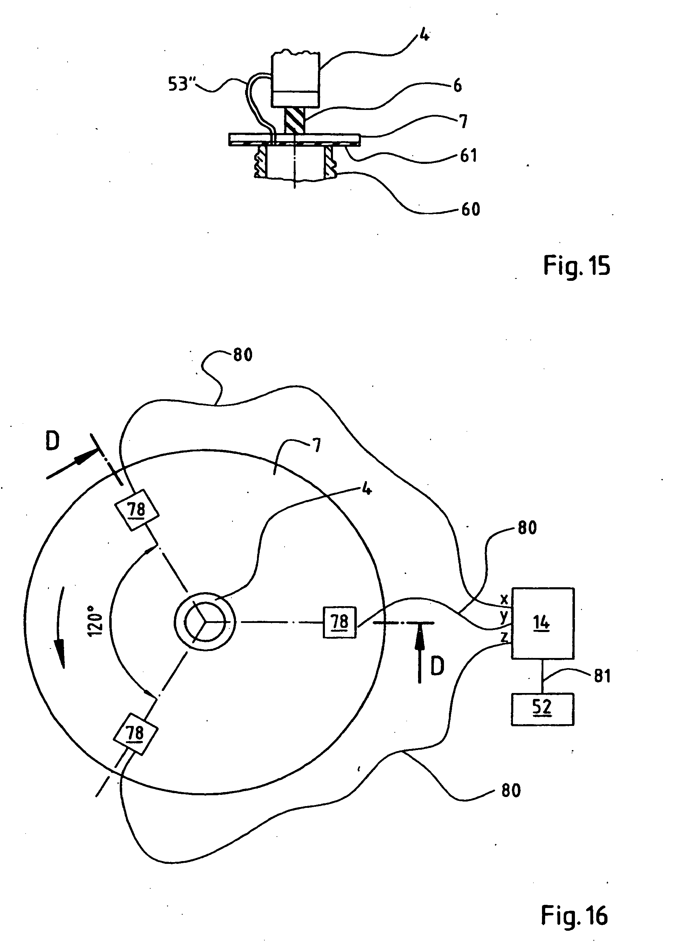

Fig. 15 zeigt eine zu der Aufhängung gemäß Fig. 13 alternative Aufhängung der Prüfplatte 7. Bei dieser Aufhängung ist wie bei der Vorrichtung gemäß der Fig. 1 und 2 ein stangenförmiger Halter 6 aus Gummi zur flexiblen Aufhängung der Prüfplatte 7 vorgesehen.

In den Fig. 16 und 17 ist das Prinzip der Abstandsmessung verdeutlicht. Die drei Abstandssensoren 78 sind in einem Winkel von 120° zueinander oberhalb der Prüfplatte 7 angeordnet und über Signalleitungen 80 mit der Auswerteeinheit 14 verbunden. Diese ist wiederum über eine Signalleitung 81 mit einem Auswerfer 52 verbunden.

Die Abstandssensoren 78 sind in gleicher Höhe oberhalb des Drehtellers 39 angeordnet. Die Vorrichtung ist so ausgelegt, dass genau dann, wenn sich ein Behälter mit aufgedrücktem Andruckkopf 2 mittig unterhalb der drei Abstandssensoren 78 befindet, der Abstand zwischen dem Abstandssensor 78 und der Oberfläche der Prüfplatte 7 gemessen wird. Die beiden in Fig. 17 gezeigten Abstandssensoren 78 messen einen Abstandswert x bzw. y. Diese Abstandsmesswerte werden über die jeweilige Signalleitung 80 in die Auswerteeinheit 14 gegeben. Wenn der senkrecht stehende Behälter eine Mündung 60 aufweist, die nicht geneigt ist, ist der Messwert x gleich dem Messwert y. Auch der Messwert des dritten Abstandssensors 78 ist gleich diesen beiden Messwerten. Wenn hingegen der Behälter eine geneigte Mündung aufweist, wird auch die Prüfplatte 7 geneigt sein. Solch eine geneigte Stellung der Prüfplatte ist in Fig. 17 strichpunktiert dargestellt, wobei die Prüfplatte mit dem Bezugszeichen 7' versehen ist. In diesem Fall ist der Abstandsmesswert y größer als der Abstandsmesswert x, und auch der Abstandsmesswert des dritten Abstandssensors ist dann größer als der Abstandsmesswert x, wie durch den strichpunktierten Pfeil 82 angedeutet ist. Aus den drei Abstandsmesswerten lässt sich der Neigungswinkel der Prüfplatte 7 bzw. 7' und somit der Behältermündung 60 ermitteln. Dies kann in der Auswerteeinheit 14 geschehen. Wenn die ermittelte Neigung der Behältermündung 60 einen vorgegebenen zulässigen Schwellenwert überschreitet, gibt die Auswerteeinheit 14 ein Steuersignal an den Auswerfer 52, so dass dieser den defekten Behälter aussondert.

Die erfindungsgemäße Vorrichtung kann insbesondere als Teil einer Vorrichtung zur Prüfung von Behältern auf eine Reihe möglicher Defekte, wie sie in Fig. 18 gezeigt ist, eingesetzt werden. Bei dieser Vorrichtung werden zu prüfende Behälter 30, bei denen es sich in Fig. 18 um Flaschen handelt, entlang einer Bahn 31 hintereinander kontinuierlich bewegt. Mittels einer Einlaufschnecke 32 werden die Behälter 30 auf Abstand zueinander gebracht und einem ersten Sternrad 33 zugeführt. Das Sternrad 33 weist Greifer 34 auf, die die Behälter 30 einzeln greifen. Die Behälter 30 werden mittels eines Bandes 38 zwischen den Greifern 34 gehalten.

An einem Träger 35 ist über dem ersten Sternrad 33 eine erste Prüfeinheit 36 befestigt. Diese Prüfeinheit 36, auf deren Funktionsweise hier im Detail nicht weiter eingegangen werden soll, dient dazu, die jeweilige Dichtfläche der Flaschenmündungen mittels einer Beleuchtungseinrichtung und einer Kamera zu prüfen. Eine ebenfalls oberhalb des ersten Sternrads 33 angebrachte zweite Prüfeinheit 37 dient dazu, mittels einer Bodenbeleuchtungsvorrichtung und einer Kamera den jeweiligen Boden der Behälter 30 zu prüfen.

Von dem Sternrad 33 werden die Behälter 30 auf einen Drehteller 39 geführt, der sich entgegen dem Uhrzeigersinn dreht. Der Drehteller 39 weist drehbare Bodenplatten 40 auf, auf denen jeweils ein Behälter 30 positioniert wird. Dabei wird jeder Behälter durch einen jeweils über der jeweiligen Bodenplatte 40 angeordneten Andruckkopf 2 gemäß den Fig. 1 und 2, den Fig. 7 und 8 oder den Fig. 11 und 12 gehalten. Der jeweilige Andruckkopf 2 wird auf die Mündung 1 des Behälters 30 abgesenkt, wenn dieser auf die Bodenplatte 40 gelangt ist, wobei die Prüfplatte 7 auf die Mündung gedrückt wird. Die Behälter 30 werden durch einen Antriebsmechanismus 41 über ein Antriebsband 42 in einem Teilbereich des Drehtellers 39 um ihre eigene Achse gedreht, wie durch die Pfeile 43 angedeutet ist.

Die so erzeugte Drehung ist Teil einer Seitenwandprüfung der Behälter 30. Bei dieser Seitenwandprüfung werden die Behälter 30 mittels einer Lichtquelle 44 seitlich beleuchtet, während von den Behältern 30 durch eine Kameraeinheit 45 ein Bild aufgenommen wird. In der Kameraeinheit 45 sind zwei Kameras (nicht gezeigt) seitlich angeordnet, in die das Licht der Behälter 30 über jeweils einen Scannerspiegel (nicht gezeigt) reflektiert wird.

Nach Durchlaufen der Seitenwandprüfung werden die Behälter 30 der erfindungsgemäßen Prüfung auf eine Neigung der Mündung 1 unterzogen. Bei Bezugszeichen 46 ist eine dazu vorgesehene erfindungsgemäße Sensoreinheit angedeutet, die ortsfest ist und als zentrale Sensoreinheit nur einmal vorhanden zu sein braucht. Die einzelnen in die Sensoreinheit 46 einlaufenden Behälter 30 werden mittels einer nicht gezeigten Sensorik registriert. Bei der Sensoreinheit 46 kann es sich um eine der oben beschriebenen Senoreinheiten handeln. Dadurch, dass bei einer Mündungsneigungsprüfung mittels Lichtreflexion das Spiegelelement ein Spiegelring 8 oder ein Spiegelplättchen 25 ist, kann die Neigungsprüfung in jeder Drehposition des Behälters 30 durchgeführt werden. Entsprechendes gilt für eine Neigungsprüfung mittels Abstandssensoren. Eine Drehung des Behälters 30 ist für die Neigungsprüfung nicht erforderlich, sie kann jedoch während der Neigungsprüfung stattfinden.

Nach der Neigungsprüfung wird der Behälter 30 von einem zweiten Sternrad 47 erfasst und wiederum durch Greifer 48 und ein Band 49 gehalten. Wenn der Behälter 30 den Drehteller 39 verlässt, hebt sich der zugehörige Andruckkopf 2 zusammen mit der Prüfplatte 7 von der Behältermündung 1.

Während der Behälter 30 von dem zweiten Sternrad 47 geführt wird, erfolgt mittels einer fünften Prüfeinheit 50 eine weitere Prüfung der Dichtfläche der Behältermündung 1. Bei dieser weiteren Prüfung wird die Dichtfläche durch Beleuchtung und Verwendung einer Kamera auf Unregelmäßigkeiten wie Kerben hin untersucht. Im Anschluss daran wird mittels einer sechsten Prüfeinheit 51 ebenfalls durch Beleuchtung und Verwendung einer Kamera jeder Behälter 30 auf Defekte der Mündungswandung hin geprüft.

Von dem zweiten Sternrad 47 werden die Behälter 30 auf einen linearen Abschnitt der Bahn 31 gegeben. Ein Behälter 30, der bei einer der sechs Prüfvorgänge einen nicht tolerablen Defekt gezeigt hat, wird durch den Auswerfer 52 ausgeworfen.

Insbesondere wenn Weithalsbehälter zu prüfen sind, bei denen aufgrund einer relativ geringen Wandstärke eine Prüfung mittels Beleuchtung problematisch ist, kann in Verbindung mit der Neigungsprüfung durch die Sensoreinheit 46 auch die oben beschriebene Dichtheitsprüfung mittels Erzeugung eines Überoder Unterdrucks über den Andruckkopf 2 durchgeführt werden. Dies kann zusätzlich oder alternativ zu den bei der Vorrichtung gemäß Fig. 18 beschriebenen Prüfschritten zur Prüfung der Behältermündung geschehen.

Bei der Prüfvorrichtung gemäß Fig. 18 können alle Prüfvorgänge vorgenommen werden, ohne den einzelnen Behälter 30 anzuhalten. Dies erlaubt einen hohen Durchsatz an Behältern.

Die erfindungsgemäße Vorrichtung kann auch in andere Transportmechaniken für Behälter integriert werden, die es erlauben, ein Prüfteil bzw. eine Prüfplatte auf die Mündung der Behälter zu legen.

## Patentansprüche

1. Vorrichtung zum Prüfen einer Behältermündung (1,1';60), insbesondere der Mündung eines Hohlglasgegenstands, auf das Vorhandensein einer Neigung, aufweisend
einen auf den Behälter (30) senkbaren Andruckkopf (2) mit einem Prüfteil (7),
Mittel (3;3';62) zum Halten und Zentrieren des Behälters (30) gegenüber dem Andruckkopf (2), wobei das Prüfteil (7) in Bezug auf die Winkelstellung relativ zur horizontalen Ebene beweglich ist und bei Eingriff der Halte- und Zentriermittel (3;3';62) mit dem Behälter (30) auf die Mündung (1,1';60) gedrückt wird und dabei in seiner Winkelstellung relativ zur horizontalen Ebene mit der Mündungsneigung korreliert,
Mittel zum Abtasten der Winkelstellung des Prüfteils (7,7') relativ zur horizontalen Ebene,
eine Auswerteeinheit (14), die aus Messwerten der Abtastmittel ein Informationssignal bezüglich der Mündungsneigung erzeugt, und
einen den Behälter (30) aussondernden Aktor (52), der durch die Auswerteeinheit (14) steuerbar ist, wenn das Informationssignal jenseits eines zulässigen Schwellenwerts liegt,
**dadurch gekennzeichnet, dass** der Andruckkopf die Mittel (3;3';62) zum Halten und Zentrieren des Behälters (30) aufweist, die Abtastmittel einen Lichtsender (10) zum Senden eines Lichtstrahls (15,15') auf ein an dem Prüfteil (7) befestigtes Spiegelelement (8;25) und einen Lichtempfänger (12) zum Empfang von Licht des vom Spiegelelement (8;25) reflektierten Lichtstrahls (17,17') aufweisen und die Auswerteeinheit (14) aus einem Lichtempfangssignal des Lichtempfängers (12) das Informationssignal bezüglich der Mündungsneigung erzeugt.

2. Vorrichtung nach Anspruch 1, **dadurch gekennzeichnet, dass** das Prüfteil (7) eine untere und eine gegenüberliegende obere Ebene definiert, wobei das Prüfteil (7) mit der unteren Ebene auf die Mündung (1,1';60) gedrückt wird und die Mittel zum Abtasten der Winkelstellung des Prüfteils (7) relativ zur horizontalen Ebene zum Abtasten der Winkelstellung der oberen Ebene relativ zur horizontalen Ebene ausgelegt sind.

3. Vorrichtung nach Anspruch 1 oder 2, **dadurch gekennzeichnet, dass** das Informationssignal ein Gut- bzw. Schlecht-Signal ist.

4. Vorrichtung nach einem der vorhergehenden Ansprüche, **dadurch gekennzeichnet, dass** das Prüfteil eine Prüfplatte (7) ist.

5. Vorrichtung nach Anspruch 4, **dadurch gekennzeichnet, dass** das Spiegelelement (8;25) auf einer Oberfläche der Prüfplatte (7) befestigt ist.

6. Vorrichtung nach einem der vorhergehenden Ansprüche, **dadurch gekennzeichnet, dass** der Lichtempfänger (12) einen derartig angeordneten Sensorring aufweist, dass Licht, welches bei nicht relativ zur horizontalen Ebene geneigtem Prüfteil (7) reflektiert wird, den Lichtempfänger (12) innerhalb des vom Sensorring umgebenen Bereichs trifft und somit kein Detektionssignal auslöst.

7. Vorrichtung nach einem der vorhergehenden Ansprüche, **dadurch gekennzeichnet, dass** der Lichtempfänger (12) ortsauflösend ausgebildet ist, so dass aus der Auftreffposition des reflektierten Lichts der Winkel der Mündungsneigung bestimmt werden kann.

8. Vorrichtung nach einem der vorhergehenden Ansprüche, **dadurch gekennzeichnet, dass** das Spiegelelement ein Spiegelring (8) ist.

9. Vorrichtung nach Anspruch 8, **dadurch gekennzeichnet, dass** der Lichtsender (10) so angeordnet ist, dass er einen Lichtstrahl (15) in einem spitzen Winkel zum Lot (16) aussenden kann und der reflektierte Lichtstrahl (17) direkt in den Lichtempfänger (12) gelangen kann.

10. Vorrichtung nach Anspruch 8, **dadurch gekennzeichnet, dass** der Lichtsender (10) so angeordnet ist, dass er einen lotrechten Lichtstrahl (15) aussenden kann, und im Strahlengang des Lichtstrahls (15) ein teildurchlässiger Spiegel (19) angeordnet ist, durch den vom Spiegelring (8) reflektiertes Licht (20,20') zum Lichtempfänger (12) gelenkt wird.

11. Vorrichtung nach einem der vorhergehenden Ansprüche, **dadurch gekennzeichnet, dass** der Andruckkopf (2) an einer Führungsstange (4) befestigt ist, deren behälterseitiges Ende mit einem elastischen zylinderförmigen Halter (6;23) zur flexiblen Aufhängung des Prüfteils (7) verbunden ist.

12. Vorrichtung nach einem der Ansprüche 1 bis 7, **dadurch gekennzeichnet, dass** das Spiegelelement ein Spiegelplättchen (25) ist, das so auf dem Prüfteil (7) angeordnet ist, dass es bei Aufliegen des Prüfteils (7) auf der Mündung (1,1') mittig zu dieser angeordnet ist.

13. Vorrichtung nach Anspruch 12, **dadurch gekennzeichnet, dass** vor dem Lichtsender (10) ein teildurchlässiger Spiegel (19) angeordnet ist, der Licht des vom Sender (10) ausgesandten Lichts (15) zu einem über dem Spiegelplättchen (25) angeordneten Prisma (26) oder weiteren Spiegel (29) reflektiert, das bzw. der das Licht (15') zu dem Spiegelplättchen (25) lenkt.

14. Vorrichtung nach Anspruch 13, **dadurch gekennzeichnet, dass** das Prisma (26) bzw. der weitere teildurchlässige Spiegel (29) in einem drehfesten Führungsrohr (22) angeordnet sind, an dem der Andruckkopf (2) drehbar befestigt ist, wobei das behälterseitige Ende des Führungsrohrs (22) mit einer Spiralfeder (23) zur flexiblen Aufhängung des Prüfteils (7) verbunden ist.

15. Vorrichtung nach einem der vorhergehenden Ansprüche, **dadurch gekennzeichnet, dass** der Lichtsender (10) ein Laser ist.

16. Vorrichtung nach einem der vorhergehenden Ansprüche, **dadurch gekennzeichnet, dass** das Prüfteil (7) Durchgriffe (9) für zentrierende Haltefinger (3) oder Aussparungen (9') für zentrierende Haltebacken (3') des Andruckkopfes (2) aufweist.

17. Vorrichtung nach einem der vorhergehenden Ansprüche 1 bis 15, **dadurch gekennzeichnet, dass** drei mit jeweils einer Druckfeder (63) beaufschlagte Stifte (62) an dem Prüfteil (7) so befestigt sind, dass sie zum Zentrieren und zum Halten der Behältermündung (60) gegen eine Innenfläche des Behälters an der Mündung (60) drücken können.

18. Vorrichtung nach einem der vorhergehenden Ansprüche, **dadurch gekennzeichnet, dass** während des Aufdrückens des Prüfteils (7) auf die Mündung (1,1',60) ein Innenraum des Behälters über eine das Prüfteil (7) durchdringende Leitung (53") mit Vakuum oder Druckluft verbindbar ist,
und dass der sich daraufhin in dem Innenraum ausbildende Druck mit einem Drucksensor (54) messbar und ein entsprechendes Messsignal in die Auswerteeinheit (14) eingebbar sind, und dass dann, wenn das Messsignal jenseits eines zulässigen Schwellenwerts liegt, durch die Auswerteinheit (14) der den Behälter aussondernde Aktor (52) steuerbar ist.

19. Vorrichtung nach einem der vorhergehenden Ansprüche, **dadurch gekennzeichnet, dass** sie Teil einer Vorrichtung zur Prüfung weiterer möglicher Defekte des Behälters (30) ist, die so ausgelegt ist, dass zu prüfende Behälter (30) entlang einer Bahn (31) hintereinander kontinuierlich bewegt werden.

20. Vorrichtung nach Anspruch 19, **dadurch gekennzeichnet, dass** die Vorrichtung zur Prüfung weiterer möglicher Defekte des Behälters (30) einen Drehteller (39) aufweist, der so ausgelegt ist, dass der Behälter (30) für eine Seitenwandprüfung entlang eines Kreisbogenabschnitts geführt und dabei um seine eigene Achse gedreht werden kann.

## Claims

1. Device for checking a container neck (1, 1';60), in particular the neck of a hollow glass object, for the presence of an incline, comprising
a pressure-contact head (2), which can be lowered on to the container (30) and has a checking part (7),
means (3;3';62) for holding and centring the container (30) with respect to the pressure-contact head (2), wherein the checking part (7) can be moved in relation to the angular position relative to the horizontal plane and as the holding and centring means (3;3';62) engage with the container (30) the said checking part is urged on to the neck (1, 1';60) and correlates in its angular position relative to the horizontal plane with the incline of the neck,
means for scanning the angular position of the checking part (7, 7') relative to the horizontal plane,
an evaluating unit (14) which uses measurement values of the scanning means to generate an information signal relating to the incline of the neck, and
an actuator (52) which screens the container (30) and which can be controlled by means of the evaluating unit (14), if the information signal is beyond a permissible threshold value,
**characterised in that** the pressure-contact head comprises the means (3;3';62) for holding and centring the container (30), the scanning means comprise a light transmitter (10) for transmitting a light beam (15, 15') on to a mirror element (8;25), which is attached to the checking part (7), and a light receiver (12) for receiving light of the light beam (17, 17') which is reflected by the mirror element (8;25) and the evaluating unit (14) uses a light reception signal of the light receiver (12) to generate the information signal relating to the incline of the neck.

2. Device as claimed in claim 1, **characterised in that** the checking part (7) defines a lower and an opposite-lying upper plane, wherein the checking part (7) is pressed with the lower plane on to the neck (1, 1';60) and the means for scanning the angular position of the checking part (7) relative to the horizontal plane are designed for scanning the angular position of the upper plane relative to the horizontal plane.

3. Device as claimed in claim 1 or 2, **characterised in that** the information signal is a pass or fail signal.

4. Device as claimed in any one of the preceding claims, **characterised in that** the checking part is a checking plate (7).

5. Device as claimed in claim 4, **characterised in that** the mirror element (8;25) is secured on a surface of the checking plate (7).

6. Device as claimed in any one of the preceding claims, **characterised in that** the light receiver (12) comprises a sensor ring which is disposed in such a manner that light which is reflected when the checking part (7) is not inclined relatively to the horizontal plane impinges upon the light receiver (12) within the region surrounded by the sensor ring and thus does not trigger a detection signal.

7. Device as claimed in any one of the preceding claims, **characterised in that** the light receiver (12) is position-resolving, so that the position of impingement of the reflected light can be used for determining the angle of the incline of the neck.

8. Device as claimed in any one of the preceding claims, **characterised in that** the mirror element is a mirror ring (8).

9. Device as claimed in claim 8, **characterised in that** the light transmitter (10) is disposed in such a manner that it can emit a light beam (15) at an acute angle to the perpendicular (16) and the reflected light beam (17) can pass directly into the light receiver (12).

10. Device as claimed in claim 8, **characterised in that** the light transmitter (10) is disposed in such a manner that it can emit a vertical light beam (15), and in the beam path of the light beam (15) there is disposed a partially transparent mirror (19), through which light (20,20') reflected by the mirror ring (8) is guided to the light receiver (12).

11. Device as claimed in any one of the preceding claims, **characterised in that** the pressure-contact head (2) is attached to a guide rod (4), whose container-side end is connected to an elastic, cylindrical holder (6;23) for the flexible suspension of the checking part (7).

12. Device as claimed in any one of claims 1 to 7, **characterised in that** the mirror element is a small plate mirror (25) which is disposed on the checking part (7) in such a manner that, when the checking part (7) lies on the neck (1, 1'), said small plate mirror is disposed centrally thereto.

13. Device as claimed in claim 12, **characterised in that** disposed in front of the light transmitter (10) is a partially transparent mirror (19) which reflects light of the light (15), which is emitted by the transmitter (10), to a prism (26), which is disposed above the small plate mirror (25), or to a further mirror (29) which deflects the light (15') to the small plate mirror (25).

14. Device as claimed in claim 13, **characterised in that** the prism (26) or the further partially transparent mirror (29) are disposed in a rotationally-fixed guide tube (22), to which the pressure-contact head (2) is rotatably attached, wherein the container-side end of the guide tube (22) is connected to a helical spring (23) for the flexible suspension of the checking part (7).

15. Device as claimed in any one of the preceding claims, **characterised in that** the light transmitter (10) is a laser.

16. Device as claimed in any one of the preceding claims, **characterised in that** the checking part (7) comprises through-holes (9) for centring holding fingers (3) or comprises recesses (9') for centring holding fixtures (3') of the pressure-contact head (2).

17. Device as claimed in any one of the preceding claims 1 to 15, **characterised in that** three pins (62), which are influenced in each case by a compression spring (63), are attached to the checking part (7) such that they can press against an inner surface of the container on the neck (60) in order to centre and to hold the container neck (60).

18. Device as claimed in any one of the preceding claims, **characterised in that** as the checking part (7) is pressed on to the neck (1, 1',60) an inner space of the container can be connected to a vacuum or compressed air by way of a line (53") which passes through the checking part (7),
and that the pressure which then forms in the inner space can be measured by a pressure sensor (54) and a corresponding measurement signal can be input into the evaluating unit (14), and that if the measurement signal is beyond a permissible threshold value, the actuator (52) which screens the container can then be controlled by the evaluating unit (14).

19. Device as claimed in any one of the preceding claims, **characterised in that** it is a part of a device for checking the container (30) for further possible defects, which device is designed in such a manner that containers (30) which are to be checked can be moved continuously one behind the other along a path (31).

20. Device as claimed in claim 19, **characterised in that** the device for checking the container (30) for further possible defects comprises a rotary table (39) which is designed in such a manner that in order to check the sidewall of the container (30), the container is guided along a portion of an arc of a circle and in so doing can be rotated about its own axis.

## Revendications

1. Dispositif pour contrôler une embouchure de récipient (1,1'; 60), en particulier l'embouchure d'un objet en verre creux, pour reconnaître l'existence d'une inclinaison, comprenant
une tête d'appui (2) pouvant être abaissée vers le récipient (30) avec un organe de test (7),
des moyens (3 ; 3' ; 62) pour retenir et centrer le récipient (30) par rapport à la tête d'appui (2), l'organe de test (7) étant mobile en termes de position angulaire par rapport au plan horizontal et étant pressé, lorsque les moyens de maintien et de centrage (3 ; 3' ; 62) sont en prise avec le récipient (30), sur l'embouchure (1, 1' ; 60) et ayant alors une position angulaire par rapport au plan horizontal corrélée à l'inclinaison de l'embouchure,
des moyens pour détecter la position angulaire de l'organe de test (7, 7') par rapport au plan horizontal,
une unité d'analyse (14), qui crée à partir des valeurs de mesure du moyen de détection un signal d'information concernant l'inclinaison de l'embouchure, et
un actionneur (52) pouvant être commandé par l'unité d'analyse (14) qui exclut le récipient (30) quand le signal d'information dépasse un seuil autorisé,
**caractérisé en ce que** la tête d'appui présente les moyens (3 ; 3' ; 62) pour maintenir et centrer le réservoir (30), les moyens de détection présentent un émetteur lumineux (10) destiné à émettre un faisceau lumineux (15, 15') vers un élément de miroir (8 ; 25) fixé sur l'organe de test (7) et un récepteur de lumière (12) destiné à capter la lumière du l'émetteur lumineux (17, 17') réfléchie par l'élément de miroir (8 ; 25) et l'unité d'analyse (14) crée à partir du signal de réception de lumière du récepteur de lumière (12) le signal d'information concernant l'inclinaison de l'embouchure.

2. Dispositif selon la revendication 1, **caractérisé en ce que** l'organe de test (7) définit un plan inférieur et un plan supérieur opposé, l'organe de test (7) étant pressé avec le plan inférieur sur l'embouchure (1, 1' ; 60) et les moyens pour détecter la position angulaire de l'organe de test (7) par rapport au plan horizontal étant conçus pour détecter la position angulaire du plan supérieur par rapport au plan horizontal.

3. Dispositif selon la revendication 1 ou 2, **caractérisé en ce que** le signal d'information est un signal « bon » ou « mauvais ».

4. Dispositif selon l'une des revendications précédentes, **caractérisé en ce que** l'organe de test est une plaque de test (7).

5. Dispositif selon la revendication 4, **caractérisé en ce que** l'élément de miroir (8 ; 25) est fixé sur une surface de la plaque de test (7).

6. Dispositif selon l'une des revendications précédentes, **caractérisé en ce que** le récepteur de lumière (12) possède un anneau de capteurs disposé de telle manière que la lumière qui est réfléchie lorsque l'organe de test (7) n'est pas incliné par rapport au plan horizontal atteigne le récepteur de lumière (12) dans la zone entourée par l'anneau de capteurs et ne déclenche ainsi pas de signal de détection.

7. Dispositif selon l'une des revendications précédentes, **caractérisé en ce que** le récepteur de lumière (12) est conçu avec une résolution locale, de sorte que la position d'incidence de la lumière réfléchie permet de déterminer l'angle d'inclinaison de l'embouchure.

8. Dispositif selon l'une des revendications précédentes, **caractérisé en ce que** l'élément de miroir est un anneau de miroirs (8) .

9. Dispositif selon la revendication 8, **caractérisé en ce que** l'émetteur lumineux (10) est disposé de telle façon qu'il puisse émettre un faisceau lumineux (15) à un angle aigu par rapport à la verticale (16) et que le faisceau lumineux réfléchi (17) puisse parvenir directement dans le récepteur de lumière (12).

10. Dispositif selon la revendication 8, **caractérisé en ce que** l'émetteur lumineux (10) est disposé de telle sorte qu'il puisse émettre un faisceau lumineux (15) vertical et **en ce qu'**il est prévu dans le trajet du faisceau lumineux (15) un miroir partiellement transparent (19) par lequel la lumière (20, 20') réfléchie par l'anneau de miroirs (8) est guidée vers le récepteur de lumière (12).

11. Dispositif selon l'une des revendications précédentes, **caractérisé en ce que** la tête d'appui (2) est fixée sur une tige de guidage (4) dont l'extrémité du côté du récipient est reliée avec une fixation cylindrique élastique (6 ; 23) en vue de la suspension souple de l'organe de test (7).

12. Dispositif selon l'une des revendications 1 à 7, **caractérisé en ce que** l'élément de miroir est une plaquette de miroir (25), qui est disposée sur l'organe de test (7) de façon à être disposée au centre par rapport à l'organe de test (7) lorsque celui-ci repose sur l'embouchure (1, 1').

13. Dispositif selon la revendication 12, **caractérisé en ce qu'**il est prévu avant l'émetteur lumineux (10) un miroir partiellement transparent (19) qui réfléchit la lumière (15) émise par l'émetteur (10) vers un prisme (26) ou un autre miroir (29) disposé au-dessus de la plaquette de miroir (25), qui guide la lumière (15') vers la plaquette de miroir (25).

14. Dispositif selon la revendication 13, **caractérisé en ce que** le prisme (26) ou l'autre miroir partiellement transparent (29) est disposé dans un tube de guidage (22) fixe en rotation, sur lequel la tête d'appui (2) est fixée avec possibilité de rotation, l'extrémité côté récipient du tube de guidage (22) étant reliée avec un ressort spiral (23) pour la suspension souple de l'organe de test (7).

15. Dispositif selon l'une des revendications précédentes, **caractérisé en ce que** l'émetteur lumineux (10) est un laser.

16. Dispositif selon l'une des revendications précédentes, **caractérisé en ce que** l'organe de test (7) présente des passages (9) pour des pattes de maintien (3) assurant un centrage ou des ouvertures (9') pour des mors de maintien (3') assurant un centrage sur la tête d'appui (2).

17. Dispositif selon l'une des revendications 1 à 15, **caractérisé en ce que** trois goupilles (62) contraintes chacune par un ressort de compression (63) sont fixées sur l'organe de test (7) de telle sorte que pour le centrage et le maintien de l'embouchure du récipient (60), elles peuvent pousser contre une surface intérieure du récipient au niveau de l'embouchure (60).

18. Dispositif selon l'une des revendications précédentes, **caractérisé en ce que** pendant l'appui de l'organe de test (7) sur l'embouchure (1, 1', 60), un volume intérieur du récipient peut être relié à un vide ou à de l'air comprimé par une conduite (53") traversant l'organe de test (7), et **en ce que** la pression qui se constitue ainsi dans le volume intérieur peut être mesurée avec un capteur de pression (54) et un signal de mesure correspondant peut être entré dans l'unité d'analyse (14), et **en ce que** lorsque le signal de mesure se situe au-delà du seuil autorisé, l'unité d'analyse (14) peut activer l'actionneur (52) qui écarte le récipient.

19. Dispositif selon l'une des revendications précédentes, **caractérisé en ce qu'**il fait partie d'un dispositif pour la recherche d'autres défauts possibles du récipient (30), qui est conçu de telle manière que des récipients (30) à contrôler sont déplacés en continu les uns à la suite des autres le long d'une piste (31).

20. Dispositif selon la revendication 19, **caractérisé en ce que** le dispositif pour la recherche d'autres défauts possibles du récipient (30) présente un plateau tournant (39) conçu de telle manière que le récipient (30) puisse être guidé le long d'une section en arc de cercle pour un contrôle des parois latérales tout en étant tourné autour de son axe.
